(19) Europäisches Patentamt
European Patent Office
Office européen des brevets

(11) Publication number: 0 158 300 B1

(12) EUROPEAN PATENT SPECIFICATION

(45) Date of publication of patent specification: 31.01.90

(51) Int. Cl.$^5$: C 07 F 9/146

(21) Application number: 85104174.9

(22) Date of filing: 04.04.85

# (54) Preparation of 2,6-Dialkyl phenoxydihalophosphites.

(30) Priority: 09.04.84 US 597866

(43) Date of publication of application: 16.10.85 Bulletin 85/42

(45) Publication of the grant of the patent: 31.01.90 Bulletin 90/05

(84) Designated Contracting States: DE FR GB IT NL

(56) References cited:
SU-A- 485 120
SU-A- 550 399
US-A-2 843 616

Holleman-Wiberg "Lehrbuch der Anorganischen Chemie" page 633

(73) Proprietor: Borg-Warner Chemicals, Inc.
200 South Michigan Avenue
Chicago Illinois 60604 (US)

(72) Inventor: Hechenbleikner, Ingenuin
Route 7
West Cornwall Connecticut 06796 (US)
Inventor: Enlow, William Palmer
Route 2, Box 11
Belpre Ohio 45714 (US)

(74) Representative: Vossius & Partner
Siebertstrasse 4 P.O. Box 86 07 67
D-8000 München 86 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 158 300 B1

## Description

This invention relates to a process for preparing 2,6-dialkylphenoxy dihalophosphites. More particularly it relates to such a process which is characterized by its use in catalytic quantities of a compound previously used as a reactant in this type of process.

2,6-Dialkylphenoxy dihalophosphites are useful as intermediates in the preparation of polymer stabilizes, lubricating oil additives, flame-retarding agents and the like. The halogen atoms are reactive with compounds containing an active hydrogen atom, or the salts thereof, for example, to form products which act to suppress the formation of corrosion products in polymer compositions.

These phenoxy dihalophosphites have in the past been prepared by the reaction of phosphorus trihalide with the appropriate alkylphenol, in the presence of molar amounts of a tertiary amine. The tertiary amine acts as a hydrogen halide acceptor.

U.S. 3,127,481 shows the reaction of 2,6-dialkylphenols with a phosphorus trihalide in the presence of a sufficient quantity of tertiary amine to react with all of the hydrogen halide liberated in the reaction. Phenols disclosed include 2,6-ditertiarybutyl phenol; phosphorus trichloride is the preferred phosphorus trihalide.

U.S. 3,412,118 shows much the same differing principally in that it claims salts of phosphites derived from the dichlorophosphites prepared as above.

U.S. 3,402,196 shows the reaction of a substituted phenol such as 2,6-ditertiarybutylphenol with phosphorus trichloride to form the expected dichlorophosphite. An amine, preferably a tertiary amine such as triethylamine, is used as a halogen acid acceptor. The resulting dichlorophosphite then is converted either to the corresponding 4-hydroxyphenyl phosphonous acid or bis (4-hydroxyphenyl) phosphonous acid.

U.S. 2,8943,616 shows a method for preparing trialkyl phosphites involving the catalyzed reaction of phosphorus trichloride or phosphorus tribromide with an alcoholate. The catalyst is a tertiary amine such as tributylamine. The alcoholates are those having 1—4 carbon atoms. Comparative experiments show that the catalyst improved the yield of trimethyl phosphite from 17% to 52% of the theory.

None of the above patents, however, show the catalyzed reaction of a phosphorus trihalide with a hindered phenol to give good yields of a dichlorophosphite product. Heretofore it apparently has been believed necessary that the hydrogen halide formed in such a process had to be converted to an amine salt as it was formed.

According to the present invention there is provided a process for the preparation of 2,6-dialkylphenoxy dihalophosphites comprising reacting equal molar quantities of a 2,6-dialkylphenol having the general formula

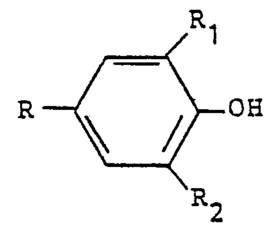

wherein R is hydrogen or methyl, $R_1$ is a tertiary alkyl group of 4—8 carbon atoms, and $R_2$ is an alkyl group of 1—8 carbon atoms, and a phosphorus trihalde at a temperature of from 60°C to 175°C in the presence of 0,001 to 0,10 mol per mol of phosphorus trihalide of a tertiary amine or a tertiary phosphine.

The reaction may be carried out simply by mixing the 2-6-dialkylphenol, phosphorus trihalide and the catalyst and heating the mixture until the reaction is completed. Generally, under such conditions the reaction ceases after about 10—20 hours. A preferred method involves sparging the phosphorus trihalide into the heated mixture of 2,6-dialkylphenol and catalyst.

This allows the reaction to be carried out at a higher temperature when, as is the usual and preferred case, the phosphorus trihalide is phosphorus trichloride. A higher temperature in turn results in a faster reaction and a shorter reaction time.

The same result, i.e., a shorter reaction time, can be achieved by carrying out the reaction under pressure. The higher pressure permits a higher reaction temperature which increases the reaction rate. Gage pressures of 0—150 psig (1—11,5 kg/cm$^2$) are contemplated. When superatmospheric pressure is employed it is advisable to vent the evolved hydrogen chloride from the reaction vessel from time to time.

The temperature of the process may range from about 60° to about 180°C. In the usual situation the process temperature will be that of the refluxing reaction mixture, i.e., about 76°C when phosphorus trichloride is the phosphorus trihalide, or about 175°C when it is phosphorus tribromide. Phosphorus trichloride, however, is the preferred reactant because of its ready availability and low cost, and the preferred temperature, for a non-pressurized reaction, is within the range of from 125°C to 150°C.

The stoichiometry of the reaction requires one mole of phosphorus trihalide per mol of 2,6-dialkylphenol. Generally, in view of the relative volatility off the phosphorus trihalide reactant, a molar excess of that reactant should be used, e.g., from about 1.05 to about 1.20 mols per mol of 2,6-dialkylphenol.

The $R_1$ and $R_2$ groups in the above structural formula of the 2,6-dialkylphenol are as indicated alkyl groups of 1—6 carbon atoms. $R_1$ is a tertiary alkyl group, e.g., tertiary butyl, 2-mehylbutanol-2,3-methylhexanol-3 and 2-methylhexanol-2. $R_2$, on the other hand, while preferably also a tertiary alkyl group, may be methyl, ethyl, isopropyl, etc. as well. Preferably, though, both $R_1$ and $R_2$ are

each tertiary alkyl groups of 4—6 carbon atoms. The reason for this preference is that these more sterically hindered phenols undergo reaction with phosphorus halides only with relative great difficulty and it is thus relatively more important that a catalyst be used.

Regardless of the method of carrying out the reaction product may be isolated by evaporating away whatever volatile materials remain, such as unreacted phosphorus halide, then distilling the residue at reduced pressure.

The phosphorus trihalide may be either phosphorus trichloride or phosphorus tribromide. Phosphorus trichloride is preferred.

The tertiary amine or tertiary phosphine has the general formula

$$R'_3A$$

wherein R′ is a hydrocarbyl group and A is nitrogen or phosphorus. The catalyst can also be polymeric, e.g., a polymer which contains pendent tertiary amine groups.

The hydrocarbyl groups represented by R may include aliphatic, aromatic or cycloaliphatic residues. The hydrocarbyl groups each contain 1—18 carbon atoms. Illustrative examples of suitable hydrocarbyl groups include methyl, ethyl, n-propyl, isopropyl, n-butyl, tertiarybutyl, n-amyl, isoamyl, n-hexyl, 2-ethylhexyl, n-octyl, n-decyl, n-dodecyl, trikdecyl, n-tetradecyl and n-octadecyl; phenyl, alpha-naphthyl, kenyl, p-totyl, 2,4-dimethylphenyl and n-octylphenyl; benzyl, phenylethyl and 4-phenylbutyl; cyclopentyl, cyclohexyl, 2-methylcyclohexyl and 4-ethyl-cyclohexyl. Hydrocarbyl groups having 1—10 carbon atoms are preferred.

The hydrocarbyl group may be divalent, e.g., tetramethylene, pentamethylene, etc.; it may be benzenoid, e.g., as in pyridine or quinoline.

Tertiary amines are preferred as catalysts. Illustrative species include pyridine, triethyl amine, tri-n-butyl amine, tri-n-hexyl amine, tris-(2-ethylhexyl) amine, triethylene diamine, diethylene, N,N-dimethyloctadecylamine, quinoline and bis-(1,8-diemthylamino) naphthalene.

Tertiary phosphine include triphenylphosphine, triethylphosphine and tris-(2-ethylhexyl) phosphine.

The catalyst is used in small amounts. From about 0.001 to about 0.10 mol per mol of phosphorus trihalide is suitable.

The process of the invention is illustrated by the following examples.

Example 1

A mixture of 37 g. (0.18 mol) of 2 6-ditertiarybutylphenol, 24.7 g. (0.18 mol) of phosphorus trichloride and five drops of pyridine is heated at reflux temperature (75°C) for 5.5 hours, then stripped to a temperature of 150°C. A total of 9 g. of unreacted phosphorus trichloride is recovered. The residue is distilled yielding 16 g. of a fraction which is found, on analysis, to contain 29% of 2,6-ditertiarybutylphenyl dichlorophospite. Yield: 29% of the theory.

Example 2

A mixture of 110 g. (0.53 mol) of 2,6-ditertiarybutylphenol, 74.2 g. (0.54 mol) of phosphorus trichloride and 0.3 g. of 1,8-bis(N,N-dimethylamino) naphthalene is heated at reflux temperature for 22 hours, at which point the reflux temperature begins to rise. An additional 39.4 g. (0.29 mol) of phosphorus trichloride is added and heating at reflux temperature resumed for another 15.5 hours. The product mixture is distilled at reduced pressure yielding 67% of the theory of the desired 2,6-ditertiarybutylphenol dichlorophosphite.

Example 3

To a mixture of 31 g. (0.15 mol) of 2,6-ditertiarybutylphenol and 0.2 g. of 1,8-bis(N,N-dimethylamino) naphthalene, heated at 150°C, there is sparged, by entrainment with dry nitrogen, 25.4 g. (0.18 mol) of phosphorus trichloride. The phosphorus trichloride is introduced throughout a period of 11.5 hours after which the product mixture is distilled at reduced pressure. Yield: 50% of theory.

Example 4

A mixture of 36.5 g. (0.22 mol) of 2-methyl-6-tertiarybutylphenol and 65.5 g. (0.48 mol) of phosphorus trichloride and five drops of pyridine is heated at reflux temperature for 90 minutes whereupon an additional 31.5 g. (0.23 mol) of phosphorus trichloride and five drops of pyridine are added. Heating at reflux temperature is continued for another two hours. The product mixture is distilled yielding 48 g. of distillate identified as the desired 2-methyl-6-tertiarybutylphenyl dichlorophosphite of 95% purity.

Example 5

A mixture of 28.5 g. (0.138 mol) of 2,6-ditertiarybutylphenol, 19.0 g. (0.138 mol) of phosphorus trichloride and 0.2 g. of triphenylphosphine are heated at reflux temperature for 26.5 hours. The product mixture is distilled yielding 26.0 g. of distillate. A gas chronomatogram of the distillate shows the presence of 20% of the desired 2,6-ditertiarybutylphenyl dichlorophosphite.

**Claims**

1. A process for the preparation of 2,6-dialkylphenoxy dihalophosphites, characterized in that equal molar quantities of a 2,6-dialkylphenol having the general formula

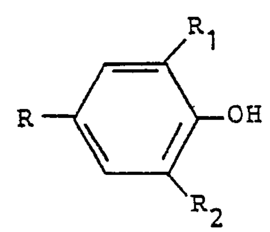

wherein R is hydrogen or methyl, $R_1$ is a tertiary alkyl group of 4—8 carbon atoms, and $R_2$ is an

alkyl group of 1—8 carbon atoms and a phosphorus trihalide are reacted at a temperature of from 60°C to 180°C in the presence of 0,001 to 0,10 mol per mol of phosphorus trihalide of a tertiary amine or a tertiary phosphine.

2. The process of Claim 1 wherein the tertiary amine is an aromatic amine.

3. The process of Claim 1 wherein phosphorus trihalide is sparged into the mixture of 2,6-dialkylphenol and catalyst.

4. The process of Claim 1 wherein the temperature of the reaction mixture is maintained between 125°C and 150°C.

**Patentansprüche**

1. Verfahren zum Herstellen von 2,6-Dialkylphenoxydihalogenphosphiten, dadurch gekennzeichnet, daß gleiche molare Mengen eines 2,6-Dialkylphenols der allgemeinen Formel

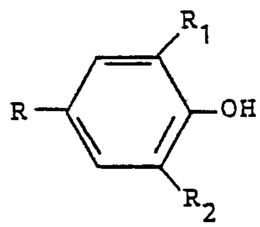

worin R Wasserstoff oder Methyl, $R_1$ eine tertiäre Alkylgruppe mit 4 bis 8 Kohlenstoffatomen und $R_2$ eine Alkylgruppe mit 1 bis 8 Kohlenstoffatomen ist, und eines Phosphortrihalogenids bei einer Temperatur von 60°C bis 180°C in Gegenwart von 0,001 bis 0,10 Mol eines tertiären Amis oder eines tertiären Phosphins pro Mol Phosphortrihalogenid umgesetzt werden.

2. Verfahren nach Anspruch 1, worin das tertiäre Amin eine aromatisches Amin ist.

3. Verfahren nach Anspruch 1, worin Phosphortrihalogenid in die Mischung aus 2,6-Dialkylphenol und Katalysator geblasen wird.

4. Verfahren nach Anspruch 1, worin die Temperatur der Reaktionsmischung zwischen 125°C und 150°C gehalten wird.

**Revendications**

1. Procédé de préparation de 2,6-dialkylphénoxydihalophosphites, caractérisé en ce que l'on fait réagir des quantités équimolaires d'un 2,6-dialkylphénol, de formule génerale:

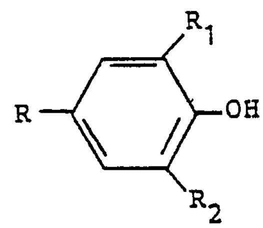

dans laquelle R représente un atome d'hydrogène ou un groupe méthyle, $R_1$ représente un groupe alkyle tertiaire comportant de 4 à 8 atomes de carbone, et $R_2$ représente un groupe alkyle comportant de 1 à 8 atomes de carbone, et d'un trihalogénure de phosphore, à une température de 60°C à 180°C, en présence de 0,001 à 0,10 mole d'une amine tertiaire ou d'une phosphine tertiaire, par mole de trihalogénure de phosphore.

2. Procédé selon la revendication 1, dans lequel l'amine tertiaire est une amine aromatique.

3. Procédé selon la revendication 1, dans lequel on fait barboter le trihalogénure de phosphore dans le mélange de 2,6-dialkylphénol et de catalyseur.

4. Procédé selon la revendication 1, dans lequel la température du mélange réactionnel, est maintenue à 125°C jusqu'à 150°C.